**Europäisches Patentamt**

**European Patent Office**

**Office européen des brevets**

(19)

(11) Publication number: **0 005 942**
**B1**

(12)

# EUROPEAN PATENT SPECIFICATION

(45) Date of publication of patent specification: **03.11.82**

(21) Application number: **79300860.8**

(22) Date of filing: **17.05.79**

(51) Int. Cl.³: **B 65 G 19/14,**
**B 65 G 23/06, B 65 G 23/44**

(54) **Cable conveyor system.**

(30) Priority: **18.05.78 US 907136**

(43) Date of publication of application:
**12.12.79 Bulletin 79/25**

(45) Publication of the grant of the patent:
**03.11.82 Bulletin 82/44**

(84) Designated Contracting States:
**BE DE FR GB IT NL SE**

(56) References cited:
**GB - A - 1 393 951**
**US - A - 3 905 473**
**US - A - 3 993 184**
**US - A - 4 071 136**

(73) Proprietor: **Intraco, Inc.**
**P.O. Box 379**
**Oskaloosa, Iowa (US)**

(72) Inventor: **Jones, Robert D.**
**129 K Avenue East Oskaloosa**
**Mahaska Iowa (US)**

(74) Representative: **Jones, Alan John et al,**
**CARPMAELS & RANSFORD 43 Bloomsbury**
**Square**
**London, WC1A 2RA (GB)**

Courier Press, Leamington Spa, England.

Cable conveyor system

This invention relates to a cable conveyor system of the type comprising a tube, an endless cable disposed in said tube, a plurality of members rigidly attached to said cable and spaced along the entire length of said cable, and drive means mounted in a housing for moving said cable and said members through said tube, said drive means including a circular member having a plurality of regularly spaced drive projections which extend radially outwardly to free ends, the free end of each drive projection having a groove receiving a portion of the cable, the groove extending in the length of the cable for a distance less than or equal to one and one half times the diameter of the cable, and the spacing between the drive projections and said members being such that, for that portion of the cable which is engaged around the drive means, there are two drive projections between each pair of adjacent members.

UK Patent Specification No. 1393951 discloses a system which is generally of this type and US Patent Specification No. 3905473 discloses a system which is similar in some respects, both systems including cable tensioning devices. Such systems can be used for driving granular or powdery materials through such a tube to a point of desired delivery.

The present invention seeks to provide an improved cable tensioner to tighten the cable in the above-mentioned type of system, the cable tensioner comprising a lever pivotally attached to said housing, guide means connected to one end of said lever and extending alongside a path of movement of said members, and biasing means connected between a portion at the other end of said lever and said housing to urge said guide means towards said members thereby to tension said cable.

If a fixed wall extends alongside the path of movement of the members, opposite the guide means of the cable tensioner, the fixed wall and the guide means being on opposite sides of the cable, then a further problem can arise due to a build-up of material between the fixed wall and the path of movement of the members. This build-up of material can prevent movement of the guide means to tension the cable in the event of cable slackness. According to a preferred embodiment of the invention, this problem is overcome by providing a movable wall which extends alongside the path of movement of the members. The movable wall is located on a side of the cable which is opposite to that on which the guide means is positioned. The movable wall is biased towards the cable so that it tends to follow the path of movement of the members, the bias of the biasing means which urge the guide means towards the cable being stronger than that of the biasing means which urge the movable wall towards the cable.

Ways of carrying out the invention are described in detail below with reference to drawings which illustrates specific embodiment in which:

Fig. 1 is a top plan view of part of a conveyor system according to the invention with a cover removed to expose working parts of drive means;

Fig. 2 is a side elevational view taken along line 2—2 of Fig. 1;

Fig. 3 is an enlarged partial cross-sectional view taken along line 3—3 of Fig. 1;

Fig. 4 is a cross-sectional view taken along line 4—4 of Fig. 3;

Fig. 5 is a partial top view of an alternative form of drive wheel;

Fig. 6 is a partial cross-sectional view taken along line 6—6 of Fig. 5;

Fig. 7 is a partial view taken along line 7—7 of Fig. 5;

Fig. 8 is a partial cross-sectional view showing a cross-section of a portion of the drive wheel taken along line 8—8 of Fig. 7;

Fig. 9 is another drive wheel shown in the top plan view thereof;

Fig. 10 is a perspective view of a portion of the drive wheel as shown in Fig. 9; and

Fig. 11 is a partial cross-sectional view taken along line 11—11 of Fig. 10.

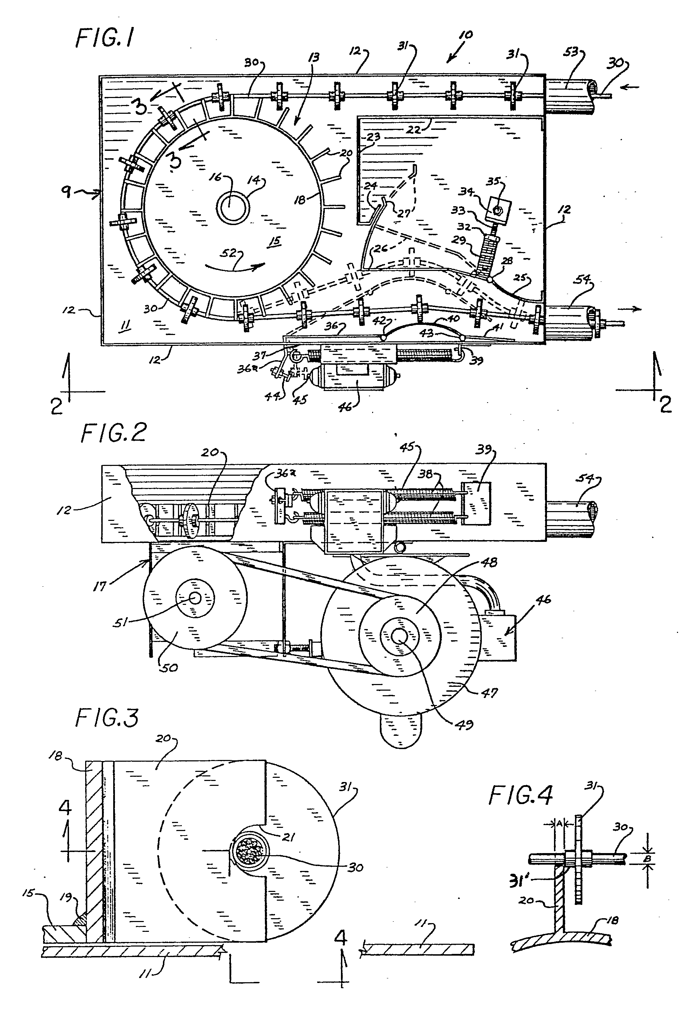

Referring now to the drawings wherein like reference numerals designate identical or corresponding parts throughout the several views, Fig. 1 shows part of a conveyor system comprising drive means 10 in a housing 9, the housing having a floor 11 and sides 12. A drive wheel 13 is disposed within the housing close to the floor 11. The drive wheel 13 comprises a sleeve 14 which is rigidly attached to a plate member 15, the sleeve 14 being rigidly attached to a shaft 16 of a differential gear box 17. A circular portion 18 is welded to the periphery of the plate member 15 by means of weldments 19. Drive projections 20 extend radially outwardly from and are attached at one end to the circular portion 18 as best seen in Fig. 1. A groove 21 is disposed in a free end of each drive projection 20. As shown in Fig. 4, the width of each projection member 20 and hence the width of each groove 21 is represented by the dimension A and the cable diameter is represented by dimension B. The ratio of these dimensions is selected (as described below) to prevent a build-up of granular or powdery material between the groove 21 and the cable 30. The housing 9 also includes interior wall members 22, 23, 24 and 25 which are stationary and are rigidly connected to the floor 11. Movable walls 26 and 27 are rigidly connected together and pivotally connected to the wall 25 by means of a hinge 28. A compression spring 29 is provided for biasing the movable walls 26 and 27 towards the cable member 30. The compression of the spring 29 is adjustable by means of a nut 32 threadably engaged upon a bolt member 33. The bolt member 33 is secured to a bracket 34 which is bolted to floor 11 of the housing by means of a nut and bolt device 35.

The cable 30 is of an endless type such as the type disclosed, for example, in US Patent Nos, 3905473 and 4071136. A plurality of nylon disc members 31 are rigidly secured to the cable 30 at regular intervals along its length, the members 31 being spaced by a distance which is twice the distance between the free ends of adjacent drive projections 20. This spacing allows two drive projections 20 to be disposed between each adjacent pair of members 31 when the members 31 travel around part of the circumference of the drive wheel 13 (as shown in Fig. 1). The housing 9 is normally filled with granular of powdery material to be conveyed and hence the drive projections 20 are disposed in this material.

Referring to Figs. 1 and 2, a cable tensioner comprises a lever 36 having an end portion 36a which extends through a slot 37 in the adjacent side 12 of the housing 9, the lever 36 thereby being pivoted to the housing. Lever 36 is movable between the respective positions shown in solid lines and the dashed lines in Fig. 1. A pair of tension springs 38 are secured between the end portion 36a and a bracket 39 which is rigidly attached to the side 12 of the housing 9. These tension springs 38 tend to bias the lever 36 towards the position shown in dashed lines in Fig. 1. The height of lever 36 is not shown in the drawings but it is approximately the same height or perhaps slightly higher than the height of the drive projections 20, but it can be as high as the sides 12 of the housing 9. The height of the walls 22—27 are preferably about as high as the sides 12 of the housing.

Guide means including plate members 40 and 41 are also attached to the lever 36. The member 40 is curved and convex to the path of movement of the disc members 31 and it is pivotally attached to the lever 36 by means of a pivot 42. The member 41 is pivotally attached to the member 40 by a hinge pivot 43. Stop projections (not shown) are provided on lever 36 and members 40 and 41 such that members 40 and 41 cannot pivot downwardly beyond the point shown in dashed lines in Fig. 1 whereby they tend to push the cable 30 to the position shown in dashed lines in Fig. 1.

An adjustable nut mechanism 44 is provided on the end portion 36a of the lever 36 for the purpose of contacting a shut-off button 45 when the lever 36 is pivoted to the position shown in dashed lines in Fig. 1. When this occurs, a switch 46 shuts off the power to an electrical motor 47 which drives the wheel 13. Referring to Fig. 2, it is noted that the motor 47, which happens to be of an electrical type, has a pulley 48 secured to an output shaft 49. This pulley 48, when rotated by the motor 47, turns the pulley 50 and an input shaft 51 of the gear box 17 which thereby causes rotation of the shaft 16 and thus the drive wheel 13 when the motor 47 is on.

In operation, when the motor 47 is turned on and the drive wheel 13 is turning in the direction indicated by the arrow 52 in Fig. 1, the alternate drive projections 20 will contact a shoulder 31' on the disc members 31 to thereby cause the cable 30 and disc members 31 to move through the housing 9. A tube including an inlet 53 and an outlet 54 will normally be full of a granular or powdery material which will be pulled into the housing 9, within the sides 12 and on top of the floor 11. Since housing 9 is filled with such material it is very important that such material does not get between the cable 30 and fill the groove 21. If this occurs the cable 30 will jump off of the drive wheel 13 and the entire system will malfunction. It is for that reason that the dimension A cannot be more than one and one-half times the dimension B. In order words the extent of the contact area on the top of the drive projection 20 cannot be more than one and one-half times the diameter of the cable 30.

Initially when the cable conveyor system is set up for use the cable would be fairly tight such that the normal path of the cable 30 would be as shown in solid lines in Fig. 1 with the members 40 and 41 pushing against the disc members 31 to take up any slack. The bias exerted by the tension springs 38 urges the guide means (members 40, 41) towards the disc members 31 when there is any slack in the cable 30, or if the cable 30 breaks. The bias exerted by the tension springs 38 is considerably more than that exerted by the compression spring 29 so that the members 26 and 27 will be pushed back, by the passage of the disc members 31, in the event of slackness or breakage of the cable 30. Normally, the walls 26 and the members 40 and 42 follow the passage of the disc members 31, and this tends to maintain a channel for the material being conveyed so that it does not build up excessively within the housing 9. If the wall 26 were to be rigidly affixed in the position shown in dashed lines in Fig. 1 and not movable, then material would build up between this wall and the cable thus preventing any movement of the cable to the position shown in dashed lines in Fig. 1 in the event of either cable slackness, or breakage. Hence, the member 44 would not contact the button 45 and shut off the motor 47 before serious damage to the drive means 10 could occur.

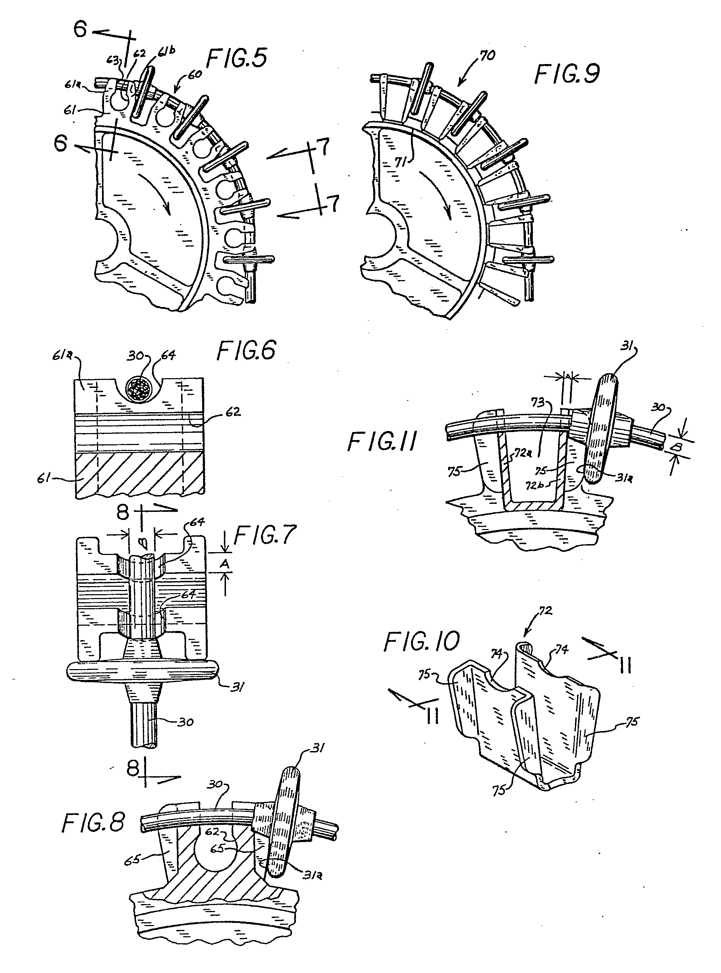

Referring now to Figs. 5—8, an alternative form of the drive wheel is disclosed. The embodiment of Figs. 5—8 is very similar to the type of drive wheel shown in US Patent No. 3905473 except that drive projections 61 have a bore 62 disposed therein and a slot 63 has been cut out from the top of the projection 61 down to the bore 62. The purpose of such modification of a prior art drive wheel is for the purpose outlined above, that is specifically to make the width A of the groove 64 of the supporting projection 61a and 61b of a width of no more than one and one-half times the diameter B of cable 30. The bore 62 along with the slot 63 not only insures and forms a relatively thin width for the groove 64 but this also provides that material can be forced out of the groove 64 to one side or the other, for example into the bore 62, so that it will not build up between the cable 30 and the supporting surfaces 64. The particular embodiment of Fig. 5 is constructed of cast aluminium but, of course, other materials of construction could be used.

Referring now to the embodiment shown in Figs. 9—11 it is noted that a drive wheel 70 is shown which has an outer rim portion 71. A plurality of drive projections 72 are connected to the outer periphery of the rim 71 such as by welding. These drive projections 72, as shown in Fig. 10, are preferably of sheet metal and have supporting grooves 74 which are of a width A which is no greater than one and one-half times the diameter of cable 30, the dimension B. In the embodiments of Figs. 9—11, as with the embodiment of Figs. 5—8, driving projections are provided to actually push on the sides of the disc members 31 to pull the cable through the tubes 53 and 54 instead of in the manner shown in the Fig. 4 embodiment wherein the leading surface of the drive projection 20 contacts a small shoulder 31' to drive the cable. Upstanding portions 72a and 72b of the drive projections 72 have a space 73 therebetween to allow material being conveyed which might be between the cable 30 and the supporting groove 74 to freely be removed from such position, it being understood that a great deal of pressure is being exerted by the cable 30 onto the groove 74. The drive projection flanges 75 contact the disc member 31 at the points 31a in a similar manner that the drive projections 65 in the embodiment of Figs. 5—8 contact the disc members 31 at the points 31a. It will also be very clear that the cable may be driven in either direction using any one of the three preferred embodiments disclosed herein.

In all three embodiments disclosed, there is more than one supporting projection between each adjacent disc member 31. The reason for such an arrangement is to prevent excessive flexing of the cable 30. If such supporting structures are not provided, the cable section between drive projections will straighten out and thereby flex as such cable section goes over the drive wheel rather than be maintained in an arcuate shape. As mentioned above, however, if wide supporting structures are used such as in the prior art to solve this problem, then such a drive wheel cannot be disposed within the material being conveyed.

## Claims

1. A conveyor system comprising a tube (53, 54), an endless cable (30) disposed in said tube, a plurality of members (31) rigidly attached to said cable and spaced along the entire length of said cable, and drive means (10) mounted in a housing (9) for moving said cable and said members through said tube, said drive means including a circular member (13) having a plurality of regularly spaced drive projections (20) which extend radially outwardly to free ends, the free end of each drive projection having a groove (21) receiving a portion of the cable, the groove extending in the length of the cable for a distance less than or equal to one and one half times the diameter of the cable, and the spacing between the drive projections and said members being such that, for that portion of the cable which is engaged around the drive means, there are two drive projections between each pair of adjacent members, and a cable tension to tension said cable (30), characterised in that said cable tensioner comprises a lever (36, 36a) pivotally attached to said housing (9), guide means (40, 41) connected (42) to one end of said lever (36) and extending alongside a path of movement of said members (31), and biasing means (38) connected between a portion (36a) at the other end of said lever (36) and said housing (9) to urge said guide means (40, 41) towards said member (31) thereby to tension said cable (30).

2. A conveyor system according to Claim 1, characterised in that said guide means (40, 41) include a first plate member (40) which is pivotally attached to said lever (36) and a second plate member (41) which is pivotally attached to said first plate member (40), said first plate member being curved and convex to the path of movement of said members (31).

3. A conveyor system according to Claim 1 or 2, characterised in that a movable wall (26) is pivotally attached to said housing (9) on the opposite side of said cable (30) from said guide means (40, 41), further biasing means (29) being provided for biasing said movable wall (26) towards said cable (30) whereby material being conveyed by said system will be channelled between said guide means (40, 41) and said movable wall (26) thereby preventing said material from accumulating in said housing (9).

4. A conveyor system according to Claim 3, characterised in that said movable wall (26) includes a portion (27) which extends closely adjacent a fixed wall (24) to prevent said material from collecting behind said movable wall (26).

5. A conveyor system according to any one of Claims 1—5 wherein said drive means is connected to an electrical motor and including means for shutting off the power to said motor when said cable becomes too slack, characterised in that said portion (36a) of said lever (36) extends through a slot (37) in said housing (9) and is positioned adjacent abutton (45) of a switch (46) for cutting off the power supply to said motor (47) when said cable (30) becomes too slack.

6. A conveyor system according to any one of the preceding claims wherein said members are disc members, characterised in that said drive projections have a flange (75) disposed one on each side of said groove (74), said flanges (75) extending forwardly into abutment with said disc members (31) to pull said cable (30) through said tube (53, 54).

**Patentansprüche**

1. Fördersystem, das einen Schlauch (53, 54), ein in diesem Schlauch angeordnetes endloses Kabel (30), eine Vielzahl von Gliedern (31) (Bauteilen), die an diesem Kabel starr befestigt und entland der gesamten Länge des Kabels im Abstand zueinander angeordnet sind und Antriebsteile (10) zum Bewegen des Kabels und der Glieder durch den Schlauch, die in einem Gehäuse (9) angeordnet sind, aufweist, wobei diese Antriebsteile ein kreisförmiges Teil (13) aufweisen, das eine Vielzahl von gleichmäßig im Abstand zueinander angeordneten Antriebs-Vorsprüngen (20) hat, die sich radial nach außen zu freien Enden erstrocken, wobei die freien Enden jedes Antriebs-Vorsprunges eine Nut (21) aufweisen, die einem Teil des Kables aufnehmen, wobei sich die Nuten in der Länge des Kabels für eine Strecke geringer oder gleich einem und einem halben Durchmesser des Kabels erstrecken und die Abstände zwischen den Antriebs-Vorsprüngen und den Gliedern so gewählt sind, daß für den Bereich des Kabels, der um die Antriebsteile angreift, zwei Antriebs-Vorsprünge zwischen jedem Paar angrenzender Glieder vorhanden sind, und das einen Kabel-Spanner zum Spannen des Kabels (30) aufweist, dadurch gekennzeichnet, daß der Kabel-Spanner einen Hebel (36, 36a) aufweist, der schwenkbar an dem Gehäuse (9) befestigt ist, daß Führungsteile (40, 41) mit einem Ende des Hebels (36, 36a) verbunden (42) sind und sich längsseits eines Fortbewegungsweges der Glieder (31) erstrecken, und daß Vorspannungsteile (38) zwischen einem Teil (36a) an dem anderen Ende dieses Hebels (36) und dem Gehäuse (9) verbunden sind, um diese Führungsteile (40, 41) in Richtung der Glieder (31) zu drücken und dadurch dieses Kable (30) zu spannen.

2. Fördersystem nach Anspruch 1, dadurch gekennzeichnet, daß die Führungsteile (40, 41) ein erstes Plattenteil (40), das schwenkbar an dem Hebel (36) angeordnet ist, und ein zweites Plattenteil (41), das schwenkbar an dem ersten Plattenteil (40) befestigt ist, aufweisen, wobei das erste Plattenteil gekrümmt und konvex zum Fortbewegungsweg des Glieder ausgebildet ist.

3. Fördersystem nach Anspruch 1 oder 2, dadurch gekennzeichnet, daß eine Wand (26) schwenkbar an dem Gehäuse (9) an der zu den Führungsteilen (40, 41) entgegengesetzten Seite des Kabels (30) befestigt ist, daß weiterhin Vorspannungsteile (29) zum Vorspannen der bewegbaren Wand in Richtung des Kabels (30) vorgesehen sind, wobei mit diesem System gefördertes Material zwischen den Führungsteilen (40, 41) und der bewegbaren Wand (26) hindurchgeleitet wird, wodurch ein Anhäufen des Materials in dem Gehäuse (9) verhindert wird.

4. Fördersystem nach Anspruch 3, dadurch gekennzeichnet, daß die bewegbare Wand (26) einen Teil (27) aufweist, der sich eng angrenzend an eine feststehende Wand (24) erstreckt, um eine Ansammlung des Materials hinter der bewegbaren Wand (26) zu verhindern.

5. Fördersystem nach einem der Ansprüche 1 bis 5, worin die Antriebsteile mit einem elektrischen Motor verbunden sind und Mittel zum Abstellen der Stromzufuhr für den Motor aufweisen, falls sich das Kabel zu sehr lockert, dadurch gekennzeichnet, daß sich der Teil (36a) des Hebels (36) durch einen Schlitz (37) in dem Gehäuse (9) erstreckt und angrenzend an einen Knopf (45) eines Schalters (46) zum Abschalten der Stromzuführ zu dem Motor (47) angeordnet ist, falls sich das Kabel zu sehr lockert.

6. Fördersystem nach einem der vorstehenden Ansprüche, worin die Glieder scheibenförmige Glieder sind, dadurch gekennzeichnet, daß die Antriebs-Vorsprünge einem Flansch (75) aufweisen, der an jeder Seiter der Vertiefung (74) angeordnet ist, wobei sich diese Flansche (75) vorwärts erstrecken und an den scheibenförmigen Gliedern (31) anliegen, um das Kabel (30) durch den Schlauch (53, 54) zu ziehen.

**Revendications**

1. Système de convoyeur comprenant un tube (53, 54), un câble sand fin (30) disposé dans ce tube, des éléments (31) fixés rigidement sur ce câble et espacés sur la totalité de la longueur dudit câble, et des moyens d'entraînement (10) montés dans un carter (9) pour déplacer ce câble et ces éléments à travers ce tube, ces moyens d'entraînement comprenant un organe circulaire (13) muni de protubérances d'entraînement régulièrement espacées (20) qui s'étendent radialement vers l'extérieur jusqu'à des extrémités libres, l'extrémité libre de chaque protubérance d'entraînement présentant une gorge (21) recevant une partie du câble, cette gorge s'étendant dans le sens de la longueur do câble sur une distance inférieure ou égale à une fois et demie le diamètre de ce câble, et l'écartement entre les protubérances d'entraînement et les éléments étant tel que, pour la partie du câble qui passe autour des moyens d'entraînement, deux protubérances d'entraînement se trouvent entre deux éléments adjacents, et un dispositif de tension du câble, pour assurer la mise en tension de ce câble (30, caractérisé en ce que ce dispositif de tension du câble comprend un levier (36, 36a) relié à pivotement à ce carter (9), des moyens de guidage (40, 41) reliés (en 42) à une extrémité de ce levier (36) et s'étendant le long d'un trajet de déplacement de ces éléments (31), et des moyens de sollicitation (38) montés entre une partie (36a) prévue à l'autre extrémité de ce levier (36) et ce carter (9), pour solliciter ces moyens de guidage (40, 41) vers ces éléments (31), en assurant ainsi la tension de ce câble (30).

2. Système de convoyeur suivant la revendication 1, caractérisé en ce que ces moyens de guidage (40, 41) comprennent une première plaque (40) qui est reliée à pivotement à ce levier (36) et une seconde plaque (41) qui est reliée à pivotement à cette première plaque (40), ladite première plaque étant incurvée et présentant une convexité orientée vers le trajet de déplacement de ces éléments (31).

3. Système de convoyeur suivant la revendication 1 ou 2, caractérisé en ce qu'une cloison mobile (26) est reliée à pivotement à ce carter (9) du côté opposé de ce câble (30) par rapport à ces moyens de guidage (40, 41) d'autres moyens de sollicitation (29) étant prévus pour solliciter cette cloison mobile (26) vers ce câble (30), de sorte que la matière qui est transportée par ce système va être canalisée entre ces moyens de guidage (40, 41) et cette cloison mobile (26) en empêchant ainsi qui cette matière ne s'accumule dans ce carter (9).

4. Système de convoyeur suivant la revendication 3, caractérisé en ce que cette cloison (26) comprend une partie (27) qui s'étend au voisinage immédiat d'une cloison fixe (24) pour empêcher cette matière d'être recueillie derrière cette cloison mobile (26).

5. Système de convoyeur suivant l'une quelconque des revendications 1 à 4, dans lequel les moyens d'entraînement sont reliés à un moteur électrique et comprenant des moyens pour interrompre l'alimentation de ce moteur en courant quand ce câble prend trop de mou, caractérisé en ce que cette partie (36a) du levier (36) s'étend à travers une fente (37) prévue dans le carter (9) et est placée au voisinage d'un bouton (45) d'un contacteur (46) pour interrompre l'alimentation en courant du moteur (47) quand le câble (30) prend trop de mou.

6. Système de convoyeur suivant l'une quelconque des revendications précédentes, dans lequel les éléments précités sont des disques, caractérisé en ce que ces protubérances d'entraînement comprennent une aile (75) disposée à raison d'une dechaque côté de la gorge (74), ces ailes (75), s'étendant vers l'avant jusque dans une relation de butée avec les disques (31) pour déplacer ce câble (30) par traction à travers ce tube (53, 54).

0 005 942

FIG.1

FIG.2

FIG.3

FIG.4

FIG.5

FIG.9

FIG.6

FIG.7

FIG.8

FIG.10

FIG.11